# EUROPEAN PATENT APPLICATION

(11) **EP 4 729 786 A1**
(43) Date of publication of application: **22.04.2026**
(21) Application number: 25199814.2
(22) Date of filing: 03.09.2025
(51) Int. Cl.: F04D 25/06, A01G 20/47, A47L 5/14, E01H 1/08, F04D 25/08, F04D 17/16, F04D 29/66

(54) **BLOWING DEVICE**

(30) Priority: 17.10.2024 CN 202411452821
(71) Applicant: Nanjing Chervon Industry Co., Ltd., Nanjing, Jiangsu 211106 (CN)
(72) Inventor: PAN, Huaping, Nanjing, Jiangsu 211106 (CN); ZHAN, Rui, Nanjing, Jiangsu 211106 (CN)
(74) Representative: Sun, Yiming

(57) **Abstract**

A blowing device includes a main housing with a handle, a mounting portion for mounting a nozzle; an electric motor including a motor body and a motor shaft; a fan discharging air from an air exhaust vent of the nozzle; and a power supply device. The fan is located between an air inlet of the main housing and the motor body in an axial direction of the motor shaft; a maximum rotational speed of the motor shaft is greater than or equal to 120,000 RPM and less than or equal to 300,000 RPM; a circuit board is located between the air exhaust vent and the motor body in the axial direction of the motor shaft; and when the electric motor is driven at the maximum rotational speed, maximum wind pressure of air discharged from the air exhaust vent is greater than or equal to 12 kPa and less than or equal to 230 kPa.

## Description

### TECHNICAL FIELD

The present application relates to the technical field of power tools and, in particular, to a blowing device.

### BACKGROUND

In daily life, air blowers are used at a high frequency in various scenarios that require cleaning or inflation. The high-pressure air generated by the air blowers is fast in speed and high in pressure.

In recent years, there has been a clear trend from pneumatic air blowers towards electric blowing devices. Electric blowing devices have a wide range of applications, which can be used for dust removal, wood chip clearing, and inflating air bags or balloons and even used as small vacuum cleaners. To complete tasks quickly, users require electric blowing devices to have relatively good and strong blowing and suction effects.

This part provides background information related to the present application, and the background information is not necessarily the existing art.

### SUMMARY

The present application adopts the technical solutions below.

A blowing device configured to discharge air from an air exhaust vent includes a main housing formed with a handle for a user to hold and a mounting portion for mounting a nozzle of multiple nozzles whose top openings are different in area and which are detachable from and mountable to the mounting portion; an electric motor at least partially accommodated in the main housing, where the electric motor includes a motor body and a motor shaft, the motor body includes a stator and a rotor, and the motor shaft is rotatable synchronously with the rotor; a fan at least partially accommodated in the main housing and configured to rotate in response to rotation of the motor shaft to discharge air from the air exhaust vent of the nozzle; and a power supply device configured to supply electrical energy to the electric motor. The fan is located between an air inlet of the main housing and the motor body in an axial direction of the motor shaft; a maximum rotational speed of the motor shaft is greater than or equal to 120,000 RPM and less than or equal to 300,000 RPM; the blowing device further includes a circuit board electrically connected to the electric motor, and the circuit board is located between the air exhaust vent and the motor body in the axial direction of the motor shaft; and when the electric motor is driven at the maximum rotational speed, maximum wind pressure of air discharged from the air exhaust vent is greater than or equal to 12 kPa and less than or equal to 230 kPa.

In some examples, the maximum rotational speed of the motor shaft is greater than or equal to 130,000 RPM.

In some examples, the maximum wind pressure of air discharged from the air exhaust vent is greater than or equal to 66 kPa.

In some examples, a maximum air volume at the air exhaust vent is greater than or equal to 0.5 m³/min and less than or equal to 4 m³/min.

In some examples, a maximum wind speed at the air exhaust vent is greater than or equal to 145 m/s and less than or equal to 620 m/s.

In some examples, a maximum thrust at the air exhaust vent is greater than or equal to 1.9 N and less than or equal to 33 N.

In some examples, the fan has a diameter less than or equal to 55 mm.

In some examples, the area of the air exhaust vent is greater than or equal to the area of a circle with a diameter of 7.2 mm and less than or equal to the area of a circle with a diameter of 13.5 mm.

In some examples, the electric motor is disposed between the fan and the circuit board.

In some examples, the blowing device further includes elastic members distributed along a radial direction of the electric motor.

In some examples, the main housing includes an inner housing and an outer housing, the electric motor is disposed inside the inner housing, and the elastic members are disposed between the electric motor and the inner housing.

In some examples, the blowing device further includes a coupling portion for coupling a battery pack, the battery pack is detachably coupled to the coupling portion, and the battery pack has a capacity greater than or equal to 5 Ah and a rated voltage greater than or equal to 18 V.

In some examples, the blowing device further includes the handle for the user to hold, and the handle includes a trigger configured to be triggered to control at least a rotational speed of the electric motor.

In some examples, the length corresponding to the handle along a front and rear direction of the blowing device is a range B, and the overall center of gravity of the blowing device is within the range B.

In some examples, the electric motor, the fan, and the circuit board are integrated.

In some examples, a blowing device configured to discharge air from an air exhaust vent includes a main housing formed with a handle for a user to hold and a mounting portion for mounting a nozzle of multiple nozzles whose top openings are different in area and which are detachable from and mountable to the mounting portion; an electric motor at least partially accommodated in the main housing, where the electric motor includes a motor body and a motor shaft, the motor body includes a stator and a rotor, and the motor shaft is rotatable synchronously with the rotor; a circuit board electrically connectable to the electric motor; a fan at least partially accommodated in the main housing and configured to rotate in response to rotation of the motor shaft to discharge air from the air exhaust vent; and a power supply device including a battery pack configured to supply electrical energy to the electric motor. The fan is located between an air inlet of the main housing and the motor body in an axial direction of the motor shaft; a maximum rotational speed of the motor shaft is greater than 120,000 RPM; and the circuit board is located between the air exhaust vent and the motor body in the axial direction of the motor shaft.

In some examples, a blowing device configured to discharge air from an air exhaust vent includes a main housing formed with a handle for a user to hold and a mounting portion for mounting a nozzle of multiple nozzles whose top openings are different in area and which are detachable from and mountable to the mounting portion; an electric motor at least partially accommodated in the main housing, where the electric motor includes a motor body and a motor shaft, the motor body includes a stator and a rotor, and the motor shaft is rotatable synchronously with the rotor; a fan at least partially accommodated in the main housing and configured to rotate in response to rotation of the motor shaft to discharge air from the air exhaust vent of the nozzle; and a power supply device configured to supply electrical energy to the electric motor. The fan is located between an air inlet of the main housing and the motor body in an axial direction of the motor shaft; a maximum rotational speed of the motor shaft is greater than or equal to 120,000 RPM and less than or equal to 300,000 RPM; the blowing device further includes a circuit board electrically connected to the electric motor, and the circuit board is located between the air exhaust vent and the motor body in the axial direction of the motor shaft; and when the blowing device drives the electric motor at the maximum rotational speed, a maximum value of a product of the area of the air exhaust vent and a wind speed of air discharged from the air exhaust vent is greater than or equal to 0.008 m³/s and less than or equal to 0.064 m³/s.

In some examples, maximum wind pressure of air discharged from the air exhaust vent is greater than or equal to 66 kPa.

In some examples, a maximum wind speed at the air exhaust vent is greater than or equal to 145 m/s and less than or equal to 620 m/s.

In some examples, the fan or the electric motor has a diameter less than or equal to 55 mm, and the ratio of the diameter of the electric motor to the diameter of the fan is greater than or equal to 0.8 and less than or equal to 1.2.

In some examples, a blowing device configured to discharge air from an air exhaust vent includes a main housing formed with a handle for a user to hold and a mounting portion for mounting a nozzle of multiple nozzles whose top openings are different in area and which are detachable from and mountable to the mounting portion; an electric motor at least partially accommodated in the main housing, where the electric motor includes a motor body and a motor shaft, the motor body includes a stator and a rotor, and the motor shaft is rotatable synchronously with the rotor; a fan at least partially accommodated in the main housing and configured to rotate in response to rotation of the motor shaft to discharge air from the air exhaust vent of the nozzle; and a power supply device configured to supply electrical energy to the electric motor. The fan is located between an air inlet of the main housing and the motor body in an axial direction of the motor shaft; the electric motor has a diameter less than or equal to 55 mm, and the ratio of the diameter of the electric motor to the diameter of the fan is greater than or equal to 0.8 and less than or equal to 1.2; the blowing device further includes a circuit board electrically connected to the electric motor, and the circuit board is located between the air exhaust vent and the motor body in the axial direction of the motor shaft; and when the electric motor is driven at a maximum rotational speed, maximum wind pressure of air discharged from the air exhaust vent is greater than or equal to 12 kPa and less than or equal to 230 kPa.

### BRIEF DESCRIPTION OF DRAWINGS

FIG. 1 is a perspective view of a blowing device according to an example.
FIG. 2 is a side view of the blowing device in FIG. 1.
FIG. 3 is a side sectional view of the blowing device in FIG. 1.
FIG. 4 is a rear view of the blowing device in FIG. 1.
FIG. 5 is an exploded view of some structures of the blowing device in FIG. 1.
FIG. 6A is a perspective view of a nozzle and an inner housing included in the blowing device in FIG. 1.
FIG. 6B is a perspective view corresponding to FIG. 6A from another angle.
FIG. 7 is a data table graph of maximum air volumes, maximum wind pressure, maximum wind speeds, and maximum thrusts corresponding to different maximum rotational speeds and blowing vents of a blowing device according to an example.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

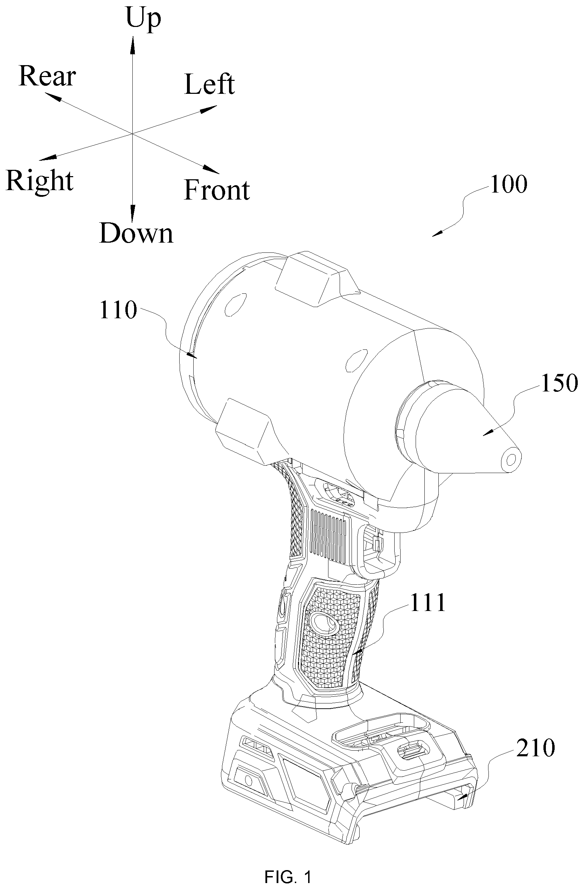

FIGS. 1 to 4 show a blowing device 100 according to an example of the present application. As shown in FIG. 1, the blowing device 100 includes a main housing 110, an electric motor 120, a fan 130, a circuit board 140, and a power supply device. To facilitate the description of technical solutions, a front side, a rear side, a left side, a right side, an upper side, and a lower side are defined, as shown in FIG. 1. A front and rear direction is an axial direction of the blowing device 100, and an up and down direction is a radial direction of the blowing device 100.

The power supply device is configured to supply electrical energy to the electric motor 120, that is, the blowing device 100. In this example, the power supply device includes a direct current power supply 200. For example, the direct current power supply 200 is a battery pack. Corresponding components in the blowing device 100 are powered by the battery pack in conjunction with a corresponding power supply circuit. It is to be understood by those skilled in the art that the power supply device is not limited to the battery pack, and the corresponding components in the machine may be powered through mains power or an alternating current power supply in conjunction with corresponding rectifier, filter, and voltage regulator circuits. In this example, the direct current power supply 200 is specifically configured to be the battery pack. The battery pack 200 is used below instead of the direct current power supply, which is not intended to limit the present application.

In some examples, the blowing device 100 further includes a coupling portion 210 for coupling the battery pack 200. As shown in FIG. 1, the coupling portion 210 is disposed at the lowermost end of the blowing device 100. The battery pack 200 is detachably coupled to the coupling portion 210 so that when the battery pack 200 has insufficient power, the battery pack 200 can be replaced at any time and charged.

In some examples, the battery pack 200 has a capacity greater than or equal to 5 Ah. Optionally, the battery pack 200 may have a capacity of 6 Ah. Optionally, the battery pack 200 may have a capacity of 8 Ah. Optionally, the battery pack 200 may have a capacity of 12 Ah. In some examples, the battery pack 200 has a rated voltage greater than or equal to 18 V. Optionally, the battery pack 200 may have a rated voltage of 18 V. Optionally, the battery pack 200 may have a rated voltage of 20 V. Optionally, the battery pack 200 may have a rated voltage of 24 V.

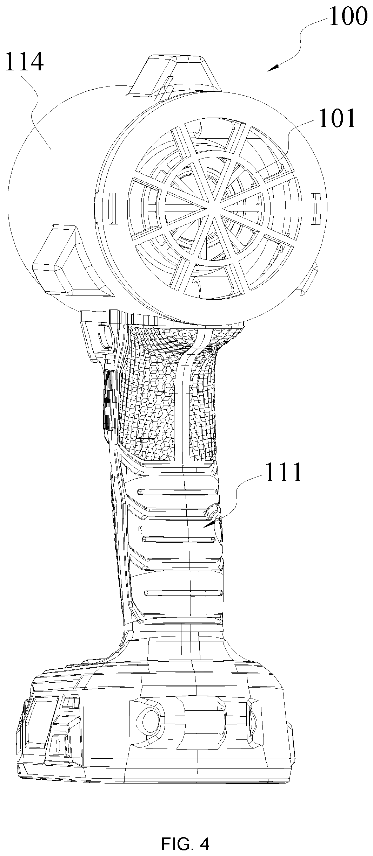

An air inlet 101 and an air outlet 102 of the blowing device 100 are formed along an axial direction of the main housing 110, the air inlet 101 is disposed at the tail end (that is, rear end) of the blowing device 100, and the air outlet 102 is disposed at the top end (that is, front end) of the blowing device 100. Optionally, an opening area of the air inlet 101 is equal to an opening area of the air outlet 102. Optionally, the opening area of the air inlet 101 is greater than the opening area of the air outlet 102 so that external air can enter the inside of the main housing 110 relatively quickly. Optionally, the opening area of the air inlet 101 is less than the opening area of the air outlet 102. The air inlet 101 may be a net-like air inlet shown in FIG. 4 or may be in any other shape that allows external air to flow into, which is not limited in the present application. In the present application, the air inlet 101 and the air outlet 102 are circular, for example. Additionally, the air inlet 101 and the air outlet 102 may be in other shapes such as a rectangle, which are not limited in the present application.

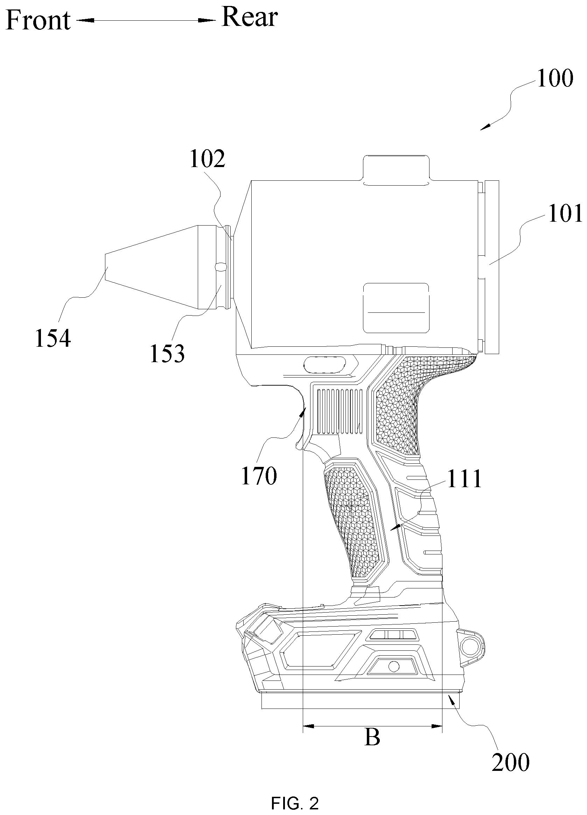

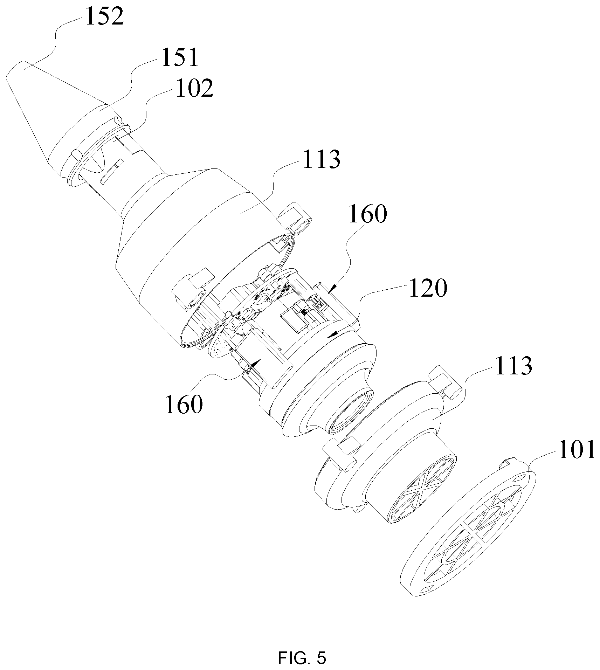

The main housing 110 is formed with a handle 111 and a mounting portion 112, the handle 111 is used for a user to hold the blowing device 100, and the mounting portion 112 is formed with the air outlet 102 and used for mounting a nozzle 150. The nozzle 150 is detachably mounted to the mounting portion 112. As shown in FIGS. 2 to 6B, the nozzle 150 is formed as a whole in the shape of a funnel with a tapered front end and extends forward from the front end of the mounting portion 112. The nozzle 150 includes a first end 151 in contact with the mounting portion 112 and a second end 152 opposite to the first end 151. The first end 151 is the tail end (that is, rear end) of the nozzle 150, the second end 152 is the top end (that is, the front end) of the nozzle 150, the first end 151 is formed with an air inlet 153 of the nozzle 150, and the second end 152 is formed with an air exhaust vent 154 of the nozzle 150. Thus, after flowing into the main housing 110 from the air inlet 101, the external air flows from the air outlet 102 to the air inlet 153 of the nozzle 150 and flows out of the blowing device 100 from the air exhaust vent 154 of the nozzle 150. Additionally, when the nozzle 150 is not mounted on the mounting portion 112, the air outlet 102 on the mounting portion 112 functions as an air exhaust vent of the blowing device 100. In the present application, the air inlet 153 and the air exhaust vent 154 are circular, for example. Additionally, the air inlet 153 and the air exhaust vent 154 may be in other shapes such as a rectangle, which are not limited in the present application.

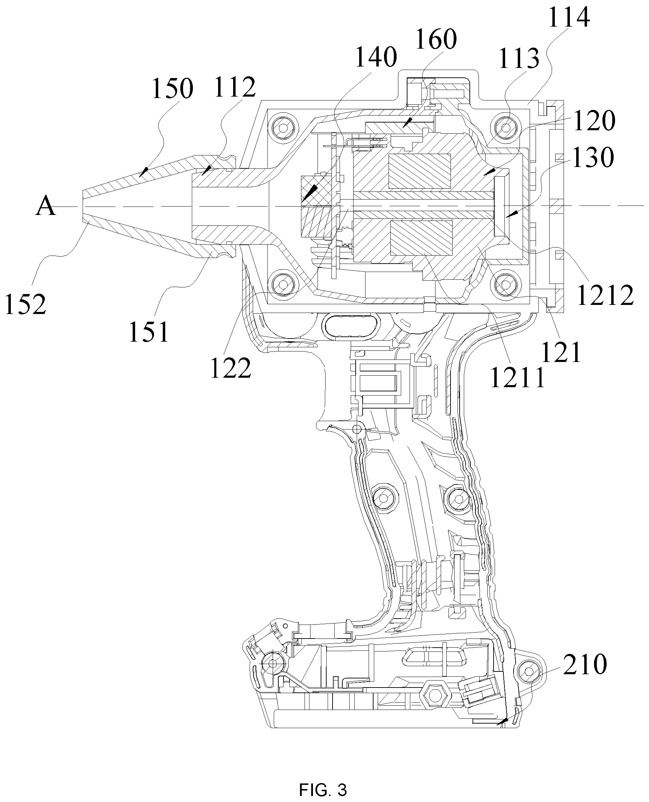

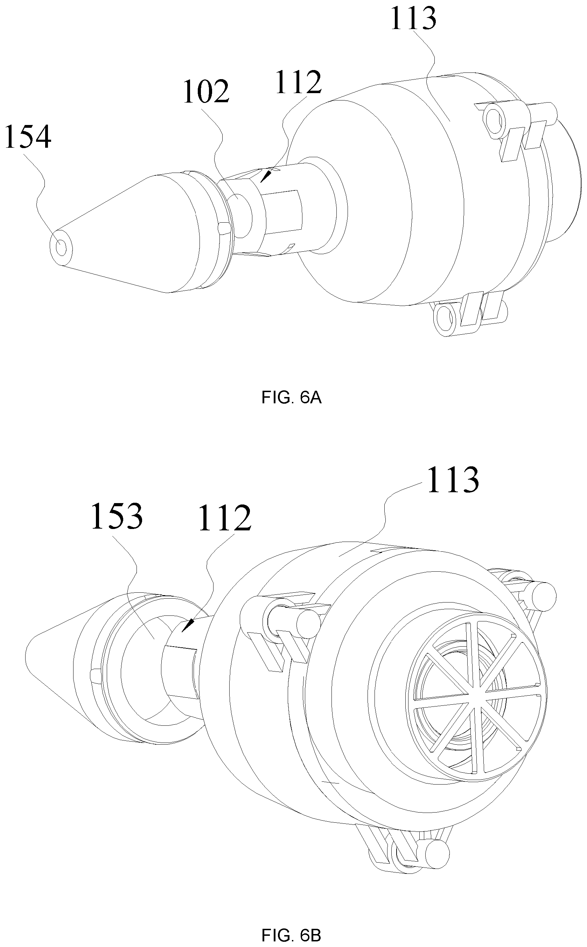

The first end 151 is a hollow circular structure sleeved on the mounting portion 112. An opening area of the first end 151 is not limited in the present application and is determined according to an opening area of the mounting portion 112. Second ends 152 of different nozzles 150 may have different opening areas. That is, different nozzles 150 are detached from and mounted to the mounting portion 112 so that the air exhaust vents 154 of the blowing device 100 from which air flows out have different opening areas, thereby satisfying use requirements in different blowing scenarios. After being sleeved on the mounting portion 112, the first end 151 may be fixed by a locking mechanism which is detachable. Alternatively, the first end 151 and the mounting portion 112 are each provided with an engaging structure and engaged with or disengaged from each other based on the engaging structure. Additionally, the first end 151 may be detachably mounted to the mounting portion 112 in other manners, which are not limited in the present application. Optionally, as shown in FIGS. 3, 6A, and 6B, an opening area of the second end 152 may be less than the opening area of the first end 151. Additionally, the opening area of the second end 152 may be greater than or equal to the opening area of the first end 151, which is not limited in the present application.

The electric motor 120 is at least partially accommodated in the main housing 110, and the electric motor 120 includes a motor body 121 and a motor shaft 122. The motor body 121 includes a stator 1211 and a rotor 1212, the electric motor 120 further includes a motor housing, and the motor body 121, the motor shaft 122, and the fan 130 are all located in the motor housing. The stator 1211 is fixedly supported in the motor housing through multiple ribs provided on an inner circumferential surface of a circumferential wall of the motor housing. The rotor 1212 and the motor shaft 122 are integrated and rotatably fixed, the motor shaft 122 is located before and after the rotor, and the motor shaft 122 drives the rotor to rotate about a first axis A extending along the axial direction of the blowing device 100. In this example, the electric motor 120 is a brushless inrunner. In other alternative examples, the electric motor 120 is a brushless outrunner. For an inrunner, the stator is disposed outside of the rotor. For an outrunner, the rotor is sleeved on the outer side of the stator. In this example, a brushless electric motor is configured to be a three-phase brushless electric motor. It is to be understood that the electric motor is not limited to the three-phase brushless electric motor and may be a direct current electric motor of another type. The above does not affect the substance of the present application.

The fan 130 is at least partially accommodated in the main housing 110, and the fan 130 rotates with the rotating motor shaft 122. As shown in FIG. 3, the fan 130 is disposed between the air inlet 101 of the main housing 110 and the motor body 121 in an axial direction of the motor shaft 122. The rotation of the fan 130 drives air (external air) to flow into the main housing 110 from the air inlet 101 and flow out of the blowing device 100 from the air exhaust vent 154 of the nozzle 150. In this process, the air flowing into the main housing 110 flows through between the stator 1211 and the rotor 1212 of the motor body 121 to cool the electric motor 120.

In some examples, the fan 130 has a diameter less than or equal to 55 mm. Optionally, the fan 130 has a diameter of 53 mm. Optionally, the fan 130 has a diameter of 50 mm. Optionally, the fan 130 has a diameter of 45 mm. Optionally, the fan 130 has a diameter of 40 mm.

The circuit board 140 is at least partially accommodated in the main housing 110, and the circuit board 140 can be electrically connected to the electric motor 120 to control the operation of the electric motor 120. As shown in FIG. 3, the circuit board 140 is located between the motor body 121 and the air exhaust vent 154 of the nozzle 150 in the axial direction of the motor shaft 122.

As shown in FIG. 3, the electric motor 120 is disposed between the fan 130 and the circuit board 140. Optionally, the electric motor 120, the fan 130, and the circuit board 140 are integrated, that is, the fan 130 and the circuit board 140 are fixedly connected to the rear side and front side of the electric motor 120, respectively and are integrated with the electric motor 120, which are integrally fixed inside the main housing 110. Alternatively, the electric motor 120, the fan 130, and the circuit board 140 may be separately disposed and fixed inside the main housing 110.

In some examples, the circuit board 140 is also electrically connected to the battery pack 200 and controls the battery pack 200 to supply electrical energy to the blowing device 100. In some examples, the blowing device 100 further includes a battery pack circuit board, the battery pack circuit board is electrically connected to the battery pack 200, the battery pack circuit board is also electrically connected to the circuit board 140, and the battery pack circuit board controls, according to a control instruction from the circuit board 140, the battery pack 200 to supply electrical energy to the blowing device 100. Optionally, the battery pack circuit board may be disposed inside the coupling portion 210. Additionally, the battery pack circuit board may be disposed at any position in the main housing 110 of the blowing device 100, which facilitates electrical connections to the circuit board 140 and the battery pack 200 and is not limited in the present application.

As shown in FIG. 3, the main housing 110 includes an inner housing 113 and an outer housing 114, where the preceding electric motor 120, fan 130, and circuit board 140 of the present application, which are at least partially disposed inside the main housing 110, are specifically disposed inside the inner housing 113. The blowing device 100 further includes elastic members 160 distributed along a radial direction of the electric motor 120. In some examples, as shown in FIGS. 3 and 6, the elastic members 160 are disposed between the electric motor 120 and the inner housing 113, and the elastic members 160 are specifically disposed at middle and tail positions of the electric motor 120 along the radial direction of the electric motor 120. Additionally, the elastic members 160 may be disposed at other positions along the radial direction of the electric motor 120, which are not limited in the present application. In some examples, the electric motor 120 mates closely with the inner housing 113, the electric motor 120 is integrated with the inner housing 113, and the elastic members 160 are disposed between the inner housing 113 and the outer housing 114 along the radial direction. The number of elastic members 160 may be greater than or equal to 1, which is not limited in the present application. Thus, when the user holds and uses the blowing device 100, the elastic members 160 can achieve vibration isolation and noise reduction for the electric motor 120, preventing the electric motor 120 from affecting the user due to too strong a vibration frequency and improving the user experience.

As shown in FIG. 2, the blowing device 100 further includes a trigger 170, the trigger 170 is a trigger switch, and the trigger 170 is disposed on the handle 111 and triggered by the user to control the blowing device 100 to be turned on or off. In some examples, the trigger 170 may also be triggered by the user to control a rotational speed of the electric motor 120, that is, the trigger 170 may not only control the blowing device 100 to be turned on or off but also serve as a speed regulator of the blowing device 100. Optionally, different depths at which the trigger 170 is triggered correspond to different gears of the blowing device 100 and different rotational speeds of the electric motor 120. The deeper the trigger 170 is triggered, the higher the rotational speed of the electric motor 120. Optionally, the trigger 170 may distinguish between the control of the blowing device 100 to be on or off and the speed regulation of the electric motor 120 based on a duration of a press. For example, when the press time of the trigger 170 is greater than or equal to a preset duration, the blowing device 100 is controlled to be on or off, and when the press time of the trigger 170 is less than the preset duration and the blowing device 100 is in an on state, the speed regulation is performed on the electric motor 120. Additionally, the trigger 170 may be in other trigger forms corresponding to the rotational speed of the electric motor 120, and the trigger 170 may distinguish between on-off and speed regulation in other manners, which are not limited in the present application. In some examples, the blowing device 100 further includes a speed regulator. When the blowing device 100 is in the on state based on the trigger 170, the speed regulator is triggered by the user to control the rotational speed of the electric motor 120. The speed regulator is disposed at any position of the blowing device 100 that facilitates the control by the user, which is not limited in the present application. Optionally, the speed regulator may be a press component and perform the speed regulation based on a press depth or the number of presses of the user. Alternatively, the speed regulator may be a rotary component and perform the speed regulation based on an angle of rotation of the user. Additionally, the speed regulator may be any other form of component that performs multi-gear speed regulation, which is not limited in the present application.

In some examples, as shown in FIG. 2, the length corresponding to the handle 111 along the front and rear direction of the blowing device 100 is a range B, and the overall center of gravity of the blowing device 100 is within the range B. That is, the overall center of gravity of the blowing device 100 is within the range corresponding to the length of the handle 111 in the front and rear direction so that the blowing device 100 can stand stably when the blowing device 100 is placed on a platform.

In some examples, a maximum rotational speed of the motor shaft 122 is greater than or equal to 120,000 RPM and less than or equal to 300,000 RPM. Optionally, the maximum rotational speed of the motor shaft 122 is greater than or equal to 130,000 RPM and less than or equal to 300,000 RPM. Optionally, the maximum rotational speed of the motor shaft 122 is 135,000 RPM. Optionally, the maximum rotational speed of the motor shaft 122 is 140,000 RPM. Optionally, the maximum rotational speed of the motor shaft 122 is 160,000 RPM. Optionally, the maximum rotational speed of the motor shaft 122 is 280,000 RPM.

In some examples, when the electric motor 120 is driven at the maximum rotational speed, that is, the maximum rotational speed of the motor shaft 122 is between 120,000 RPM and 300,000 RPM, a rotational speed of the fan 130 is greater than or equal to 120,000 RPM and less than or equal to 300,000 RPM. That is, the rotational speed of the fan 130 corresponds to the maximum rotational speed of the motor shaft 122, and the fan 130 rotates synchronously with the motor shaft 122. Additionally, the rotational speed of the fan 130 may not correspond to the maximum rotational speed of the motor shaft 122, which is not limited in the present application.

In some examples, the area of the air exhaust vent 154 of the nozzle 150 is greater than or equal to the area of a circle with a diameter of 7.2 mm and less than or equal to the area of a circle with a diameter of 13.5 mm. Optionally, the area of the air exhaust vent 154 of the nozzle 150 is equal to the area of a circle with a diameter of 8 mm. Optionally, the area of the air exhaust vent 154 of the nozzle 150 is equal to the area of a circle with a diameter of 10 mm. Optionally, the area of the air exhaust vent 154 of the nozzle 150 is equal to the area of a circle with a diameter of 12 mm.

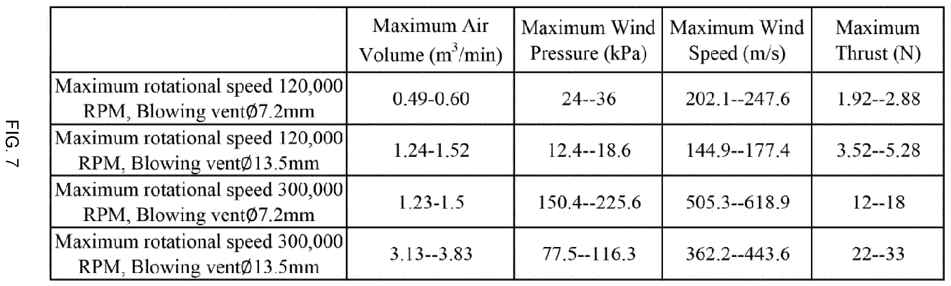

In some examples, the maximum rotational speed of the motor shaft 122 is greater than or equal to 120,000 RPM and less than or equal to 300,000 RPM, the area of the air exhaust vent 154 of the nozzle 150 is greater than or equal to the area of the circle with a diameter of 7.2 mm and less than or equal to the area of the circle with a diameter of 13.5 mm, and a maximum air volume, maximum wind pressure, a maximum wind speed, and a maximum thrust at the air exhaust vent 154 of the nozzle 150 are all related to the maximum rotational speed of the motor shaft 122 and the area of the air exhaust vent 154. Therefore, in the present application, a maximum rotational speed of 120,000 RPM and a maximum rotational speed of 300,000 RPM are each combined with the area of the air exhaust vent 154, which is the area of the circle with a diameter of 7.2 mm or the area of the circle with a diameter of 13.5 mm, as examples to conduct tests and calculate value ranges of the maximum air volume, maximum wind pressure, maximum wind speed, and maximum thrust. The specific ranges are shown in FIG. 7. The maximum air volume, maximum wind pressure, maximum wind speed, and maximum thrust are all measured at room temperature of 25°C and an air density of 1.18 kg/m³.

In some examples, the maximum wind pressure P is measured by a wind pressure meter directly placed at the air outlet. In some examples, the maximum wind speed V is calculated according to the following formula: V = SQRT (P × 2000/ρ), where P denotes the measured maximum wind pressure, and ρ denotes the air density. In some examples, after the maximum wind speed V is calculated, the maximum air volume Q is calculated according to the following formula: Q = V × S × 60/1000000, where S denotes the area of the air exhaust vent 154 of the nozzle 150. In some examples, after the maximum wind speed V is calculated, the maximum thrust F is obtained according to the following formula: F = ρSV²/1000000. In the above formulas, the unit of the maximum wind pressure P is kPa, the unit of the maximum wind speed V is m/s, the air density ρ is specifically 1.18 kg/m³, the unit of the area S of the air exhaust vent 154 of the nozzle 150 is mm², and the unit of the thrust F is N.

In some examples, when the electric motor 120 is driven at the maximum rotational speed, that is, the maximum rotational speed of the motor shaft 122 is between 120,000 RPM and 300,000 RPM, the maximum wind pressure of air discharged from the air exhaust vent 154 of the nozzle 150 is greater than or equal to 12 kPa and less than or equal to 230 kPa. Optionally, the maximum wind pressure of air discharged from the air exhaust vent 154 is greater than or equal to 66 kPa and less than or equal to 230 kPa. Optionally, the maximum wind pressure of air discharged from the air exhaust vent 154 is 70 kPa. Optionally, the maximum wind pressure of air discharged from the air exhaust vent 154 is 110 kPa. Optionally, the maximum wind pressure of air discharged from the air exhaust vent 154 is 150 kPa. Optionally, the maximum wind pressure of air discharged from the air exhaust vent 154 is 220 kPa.

In some examples, the maximum air volume at the air exhaust vent 154 of the nozzle 150 is greater than or equal to 0.5 m³/min and less than or equal to 4 m³/min. Optionally, the maximum air volume at the air exhaust vent 154 is greater than or equal to 1.5 m³/min and less than or equal to 4 m³/min. Optionally, the maximum air volume at the air exhaust vent 154 is 1.6 m³/min. Optionally, the maximum air volume at the air exhaust vent 154 is 2 m³/min. Optionally, the maximum air volume at the air exhaust vent 154 is 3 m³/min.

In some examples, the maximum wind speed at the air exhaust vent 154 of the nozzle 150 is greater than or equal to 145 m/s and less than or equal to 620 m/s. Optionally, the maximum wind speed at the air exhaust vent 154 is greater than or equal to 200 m/s and less than or equal to 620 m/s. Optionally, the maximum wind speed at the air exhaust vent 154 is 300 m/s. Optionally, the maximum wind speed at the air exhaust vent 154 is 420 m/s. Optionally, the maximum wind speed at the air exhaust vent 154 is 460 m/s.

In some examples, the maximum thrust at the air exhaust vent 154 of the nozzle 150 is greater than or equal to 1.9 N and less than or equal to 33 N. Optionally, the maximum thrust at the air exhaust vent 154 of the nozzle 150 is greater than or equal to 5.1 N and less than or equal to 33 N. Optionally, the maximum thrust at the air exhaust vent 154 of the nozzle 150 is 6 N. Optionally, the maximum thrust at the air exhaust vent 154 of the nozzle 150 is 9.5 N. Optionally, the maximum thrust at the air exhaust vent 154 of the nozzle 150 is 26 N.

In some examples, a maximum value of a product of the area of the air exhaust vent 154 and a wind speed of air discharged from the air exhaust vent 154 is greater than or equal to 0.008 m³/s and less than or equal to 0.064 m³/s. Optionally, the maximum value of the product of the area of the air exhaust vent 154 and the wind speed of air discharged from the air exhaust vent 154 is 0.01 m³/s. Optionally, the maximum value of the product of the area of the air exhaust vent 154 and the wind speed of air discharged from the air exhaust vent 154 is 0.020 m³/s. Optionally, the maximum value of the product of the area of the air exhaust vent 154 and the wind speed of air discharged from the air exhaust vent 154 is 0.025 m³/s.

In some examples, the ratio of the diameter of the electric motor 120 to the diameter of the fan 130 is greater than or equal to 0.8 and less than or equal to 1.2. Optionally, the ratio of the diameter of the electric motor 120 to the diameter of the fan 130 is 0.95. Optionally, the ratio of the diameter of the electric motor 120 to the diameter of the fan 130 is 1. Optionally, the ratio of the diameter of the electric motor 120 to the diameter of the fan 130 is 1.05.

The rotational speed of the electric motor and the area of the air exhaust vent are set as above in the present application so that the maximum air volume, maximum wind pressure, maximum wind speed, and maximum thrust discharged from the air exhaust vent are all relatively large, and the blowing effect is relatively strong. Thus, when using the blowing device, the user can quickly complete tasks, improving the working efficiency of the user.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A blowing device configured to discharge air from an air exhaust vent, comprising:
a main housing formed with a handle for a user to hold and a mounting portion for mounting a nozzle, the mounting portion is configured to be detachable from one of a plurality of nozzles having different top opening areas;
an electric motor at least partially accommodated in the main housing, wherein the electric motor comprises a motor body and a motor shaft, the motor body comprises a stator and a rotor, and the motor shaft is rotatable synchronously with the rotor;
a fan at least partially accommodated in the main housing and configured to rotate in response to rotation of the motor shaft to discharge air from the air exhaust vent of the nozzle; and
a power supply device configured to supply electrical energy to the electric motor;
wherein the fan is located between an air inlet of the main housing and the motor body in an axial direction of the motor shaft; a maximum rotational speed of the motor shaft is greater than or equal to 120,000 RPM and less than or equal to 300,000 RPM; the blowing device further comprises a circuit board electrically connected to the electric motor, and the circuit board is located between the air exhaust vent and the motor body in the axial direction of the motor shaft;
wherein when the electric motor is driven at the maximum rotational speed, maximum wind pressure of air discharged from the air exhaust vent is greater than or equal to 12 kPa and less than or equal to 230 kPa.

2. The blowing device according to claim 1, wherein the maximum rotational speed of the motor shaft is greater than or equal to 130,000 RPM.

3. The blowing device according to claim 1, wherein the maximum wind pressure of air discharged from the air exhaust vent is greater than or equal to 66 kPa.

4. The blowing device according to claim 1, wherein a maximum air volume at the air exhaust vent is greater than or equal to 0.5 m³/min and less than or equal to 4 m³/min.

5. The blowing device according to claim 1, wherein a maximum wind speed at the air exhaust vent is greater than or equal to 145 m/s and less than or equal to 620 m/s.

6. The blowing device according to claim 1, wherein a maximum thrust at the air exhaust vent is greater than or equal to 1.9 N and less than or equal to 33 N.

7. The blowing device according to claim 1, wherein the fan has a diameter less than or equal to 55 mm.

8. The blowing device according to claim 1, wherein an area of the air exhaust vent is greater than or equal to an area of a circle with a diameter of 7.2 mm and less than or equal to an area of a circle with a diameter of 13.5 mm.

9. The blowing device according to claim 1, wherein the electric motor is disposed between the fan and the circuit board.

10. The blowing device according to claim 1, further comprising elastic members distributed along a radial direction of the electric motor.

11. The blowing device according to claim 10, wherein the main housing comprises an inner housing and an outer housing, the electric motor is disposed inside the inner housing, and the elastic members are disposed between the electric motor and the inner housing.

12. The blowing device according to claim 1, wherein the power supply device is a battery pack, the blowing device further comprises a coupling portion for coupling the battery pack, the battery pack is detachably coupled to the coupling portion, and the battery pack has a capacity greater than or equal to 5 Ah and a rated voltage greater than or equal to 18 V.

13. The blowing device according to claim 1, wherein the handle comprises a trigger configured to be triggered to control at least a rotational speed of the electric motor.

14. The blowing device according to claim 11, wherein a length corresponding to the handle along a front and rear direction of the blowing device is a range B, and an overall center of gravity of the blowing device is within the range B.

15. The blowing device according to claim 1, wherein the electric motor, the fan, and the circuit board are integrated.
